# EUROPEAN PATENT APPLICATION

(11) **EP 4 738 112 A1**
(43) Date of publication of application: **06.05.2026**
(21) Application number: 24830455.2
(22) Date of filing: 06.06.2024
(51) Int. Cl.: G06F 9/451

(54) **INFORMATION DISPLAY METHOD AND RELATED DEVICE**

(30) Priority: 28.06.2023 CN 202310779065
(71) Applicant: Beijing Youzhuju Network Technology Co., Ltd., Beijing 101299 (CN)
(72) Inventor: PANG, Qiyao, Beijing 100028 (CN); HUANG, Yizhan, Beijing 100028 (CN); XIE, Yihui, Beijing 100028 (CN); WEI, Jianjian, Beijing 100028 (CN); REN, Jingzhan, Beijing 100028 (CN)
(74) Representative: Marks & Clerk LLP
(86) International application number: PCT/CN2024/097872
(87) International publication number: WO 2025/001809

(57) **Abstract**

The present disclosure provides an information display method and a related device. For example, the display method includes: displaying an object display page, where the object display page includes at least first attribute information of a target object, and list information corresponding to the target object; and displaying a list page corresponding to the list information in response to a trigger operation for the list information corresponding to the target object, where second attribute information of the target object is displayed in a primary region of the list page.

## Description

The present application claims priority to Chinese Patent Application No. 202310779065.X, filed with the China National Intellectual Property Administration on June 28, 2023 and entitled "INFORMATION DISPLAY METHOD AND RELATED DEVICE", which is incorporated herein by reference in its entirety.

### FIELD

The present disclosure relates to the field of information display technologies, and in particular, to an information display method and a related device.

### BACKGROUND

With the continuous development of Internet technologies, various lists are continuously optimized to provide users with the convenience of learning relevant information efficiently. Currently, objects (e.g., products and trending topics) on a list are displayed by means of recommendation pages, category pages, etc. A user may tap on a list control corresponding to an object of interest to go to a list page to view the entire list. However, the entire list page adopts a fixed display manner, such that the object of interest cannot be displayed in a targeted manner, resulting in reduced user browsing efficiency and poor user experience.

### SUMMARY

In view of this, it is an object of the present disclosure to provide an information display method and a related device.

Based on the above-mentioned object, according to a first aspect, an embodiment of the present disclosure provides an information display method. The display method includes:
displaying an object display page, where the object display page includes at least first attribute information of a target object, and list information corresponding to the target object; and
displaying a list page corresponding to the list information in response to a trigger operation for the list information corresponding to the target object, where second attribute information of the target object is displayed in a primary region of the list page.

According to a second aspect, an embodiment of the present disclosure provides an information display apparatus. The display apparatus includes:
a first display module configured to: display an object display page, where the object display page includes at least first attribute information of a target object, and list information corresponding to the target object; and
a second display module configured to: display a list page corresponding to the list information in response to a trigger operation for the list information corresponding to the target object, where second attribute information of the target object is displayed in a primary region of the list page.

According to a third aspect, an embodiment of the present disclosure provides an electronic device. The electronic device includes a memory, a processor, and a computer program stored on the memory and executable on the processor, where the processor, when executing the program, implements the display method according to the first aspect.

According to a fourth aspect, an embodiment of the present disclosure provides a non-transitory computer-readable storage medium storing computer instructions, where the computer instructions are used to cause a computer to perform the display method according to the first aspect.

According to a fifth aspect, an embodiment of the present disclosure provides a computer program product including computer program instructions that, when executed on a computer, cause the computer to perform the display method according to the first aspect.

### BRIEF DESCRIPTION OF THE DRAWINGS

In order to more clearly describe the technical solutions in the present disclosure or in the related art, the accompanying drawings for describing the embodiments or the related art will be briefly described below. Apparently, the accompanying drawings in the description below show merely the embodiments of the present disclosure, and those of ordinary skill in the art may still derive other accompanying drawings from these accompanying drawings without creative efforts.
FIGS. 1A and 1B are schematic diagrams of an information display manner provided in the related art;
FIG. 2 is a schematic structural diagram of a system architecture according to an embodiment of the present disclosure;
FIG. 3 is a schematic flowchart of an information display method according to an embodiment of the present disclosure;
FIG. 4A is a schematic structural diagram of an object display page according to an embodiment of the present disclosure;
FIG. 4B is a schematic structural diagram of a list page according to an embodiment of the present disclosure;
FIG. 4C is a schematic structural diagram of another list page according to an embodiment of the present disclosure;
FIG. 5 is a schematic structural diagram of a display apparatus according to an embodiment of the present disclosure; and
FIG. 6 is a schematic structural diagram of an electronic device according to an embodiment of the present disclosure.

### DETAILED DESCRIPTION OF EMBODIMENTS

In order to make the objects, technical solutions, and advantages of the present disclosure clearer, the present disclosure is further described below in detail with reference to specific embodiments and the accompanying drawings.

It is to be noted that unless otherwise defined, the technical or scientific terms used in the embodiments of the present disclosure shall have general meanings as understood by those of ordinary skill in the art to which the present disclosure pertains. "First", "second", and like words used in the embodiments of the present disclosure do not indicate any order, quantity, or importance, but are merely used to distinguish between different components. "Include", "comprise", or like words mean that an element or item preceding the term encompasses an element or item or its equivalent listed after the term, without excluding other elements or items. "Connection", "mutual connection", or like words are not limited to a physical or mechanical connection, but may include an electrical connection, whether direct or indirect. "Up", "down", "left", "right", and the like are merely used to indicate a relative positional relationship, and the relative positional relationship may change accordingly when an absolute position of the described object changes.

It is to be understood that before the use of the technical solutions disclosed in the embodiments of the present disclosure, the user may be informed of the type, range of use, use scenarios, etc., of personal information involved in the present disclosure in an appropriate manner in accordance with the relevant laws and regulations, and the authorization of the user may be obtained.

For example, in response to reception of an active request from the user, prompt information is sent to the user to clearly inform the user that a requested operation will require access to and use of the personal information of the user. As such, the user may independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It is to be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

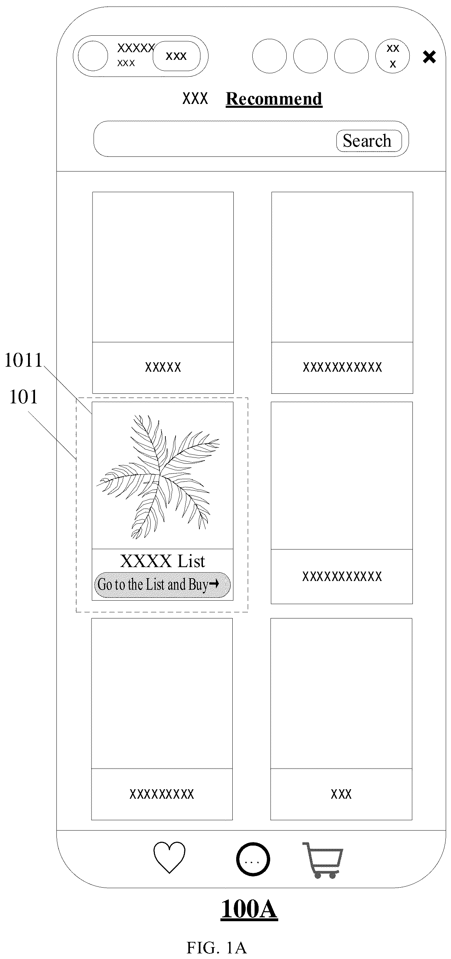

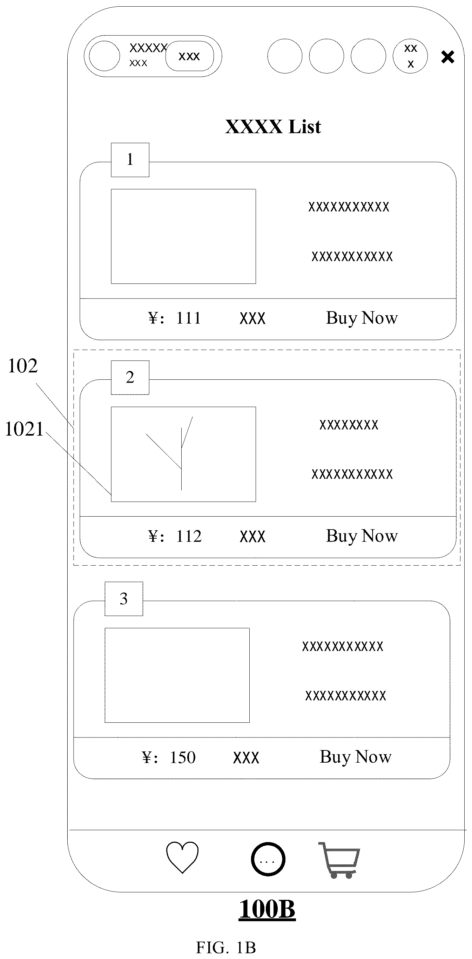

FIGS. 1A and 1B are schematic diagrams of an information display manner provided in the related art. FIG. 1A is a schematic diagram of an object display page 100A provided in the related art. FIG. 1B is a schematic diagram of a list page 100B provided in the related art.

The object display page 100A may be a search page, a recommendation page, etc. A first information card 101 is displayed on the object display page 100A. For example, the first information card 101 displays a target object picture 1011 and corresponding list information. Here, an object displayed by the first information card 101 may be an object ranking first on a list, or an object ranking second, or N^{th} on the list. That is, the target object displayed by the first information card 101 may be any object on the list. When a user triggers the list information, the page is directly switched to the corresponding list page 100B. As shown in FIG. 1B, on the list page 100B, the objects (e.g., a plurality of list object information cards 102 listed in order) on the list are generally displayed according to the ranking order of the list. That is, the switch results in the same list page 100B regardless of the object on the list that is displayed in the object display page 100A.

Such a manner allows the user to conveniently view list objects similar to the target object of interest. However, the user enters the list page 100B because of an interest in the object in the first information card 101, but the list page 100B in the related art cannot display the target object of interest to the user differently. If the target object ranks low on the list and cannot be displayed directly on a first screen after the switch, the user may have to spend efforts on searching before viewing the target object of interest. For example, the user needs to swipe to make the list page 100B scroll, which definitely increases the operation steps for the user and reduces the user browsing experience.

In addition, both the target object picture 1011 and the corresponding list information are displayed on the object display page 100A. When the user intends to trigger the target object picture 1011 to view a detail page of the target object, the user may touch the list information by mistake to trigger the display of the list page. Such a display result does not meet an operation expectation of the user, and the user needs to perform a returning operation, or the like, to re-display the object display page 100A, such that the target object can be viewed, which greatly affects the user experience.

In view of this, an embodiment of the present disclosure provides an information display method. According to the display method, second attribute information of the target object is displayed in a primary region of the list page, so as to achieve targeted display of the target object for the user, without searching for the target object, thereby improving the user browsing experience and reducing the operation steps. In addition, when the user intends to display the detail page of the target object but mistakenly displays the list page, the user does not need to return to the object display page to view the target object. The target object can be directly viewed on the list page, which facilitates improving the user experience.

In order to make the technical solutions in the present disclosure clearer and readily understandable, a system architecture of the information display method according to the embodiment of the present disclosure is described below in conjunction with the accompanying drawings. It is to be noted that the above-mentioned system architecture is shown only for ease of understanding the spirit and principles of the present application, and the implementation of the present disclosure is not limited in this respect. Rather, the implementation of the present application can be applied to applicable system architectures.

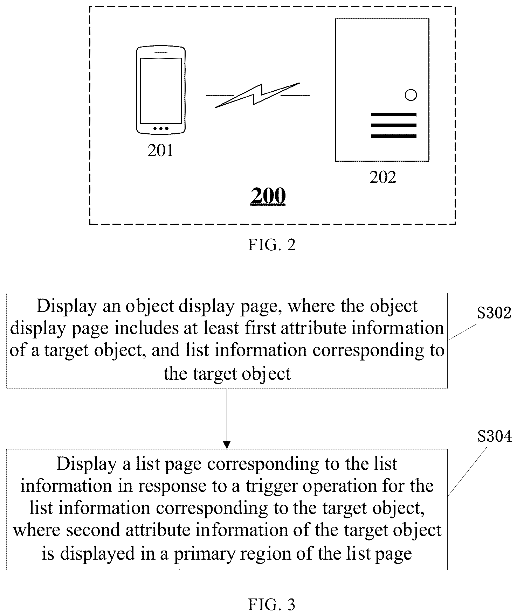

The information display method according to the embodiment of the present disclosure includes, but is not limited to, application to the system architecture 200 as shown in FIG. 2. As shown in FIG. 2, the system architecture includes a client 201 and a server 202. The client 201 may, for example, refer to a client provided for use by a user, such as a buyer user or a consumer user. The client may, for example, exist in the form of a standalone application, or in the form of Web, H5 pages, etc. The client may run in a terminal device of a user, and mainly provides functions of front-end page display and interaction with the user. For example, the terminal device of the user may be user equipment (UE), a mobile device, a user terminal, a terminal, a cellular phone, a cordless phone, a personal digital assistant (PDA), a handheld device, a computing device, an in-vehicle device, a wearable device, or the like. The server 202 may typically run in a cloud server, and mainly provides data storage, data matching, and other services in the background.

Next, the information display method according to the embodiment of the present disclosure will be described in detail from the perspective of the client.

Referring to the flowchart of the information display method shown in FIG. 3, the display method includes the following steps.

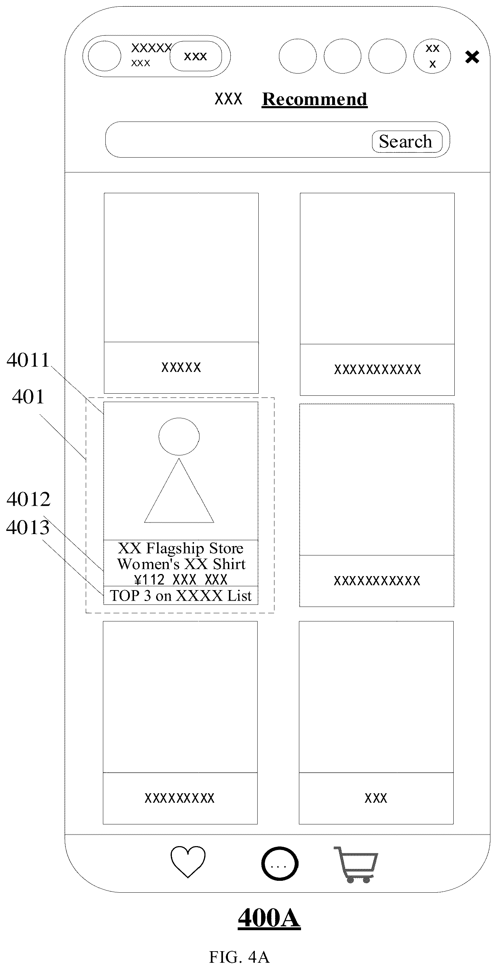

FIG. 4A is a schematic structural diagram 400A of an object display page according to an embodiment of the present disclosure. Here, there may be various object display pages 400A, for example, any page that may include first attribute information of a target object, and list information, such as a search result page, a category page (e.g., women's clothing, shoes, and greenery), and a main page of the client.

Step S302: an object display page is displayed, where the object display page includes at least first attribute information of a target object, and list information corresponding to the target object.

For example, the object display page 400A may be displayed on the client through an operation of the user. The information required to display the object display page may be obtained from the server or stored locally at the client. The first attribute information 4011 and 4012 of the target object, and the corresponding list information 4013 that are displayed in the form of a first information card 401 are displayed on the object display page 400A.

It is to be noted that the information display method according to the embodiment of the present disclosure may be applied to online shopping malls, social media platforms, etc. Accordingly, the target object refers to an object operated by the user, which may be a product, a topic, a message, etc., selected by the user, which is not limited in the present disclosure.

The object display page refers to a page that displays an object. Here, the object may be a target object or a non-target object. The non-target object refers to an object that is not operated by the user.

Generally, the object display page includes a plurality of resource positions, and each resource position may be used to display information of an object, including brief summary information, such as a picture, a title, a source, and a resource value, of the object. The first attribute information of the target object, and the list information corresponding to the target object are displayed in a resource position.

The target object is one of objects on a list corresponding to the list information, i.e., a listed object (a list object). Here, the list where the target object is located meets a display condition of the list, and the target object itself also needs to meet the display condition, such that a target product can be displayed on the object display page 100A. The specific display condition is not limited in the present disclosure.

In some embodiments, display positions of the first attribute information and the list information corresponding to the target object are adjacent to each other. Here, adjacency may be vertical adjacency or horizontal adjacency.

In some alternative embodiments, the display positions of the first attribute information and the list information corresponding to the target object at least partially overlap each other. For example, the list information is located entirely above the first attribute information, or the list information is located partially above the first attribute information.

In this way, the user can conveniently observe and determine the correspondence between the first attribute information and the list information.

The first attribute information is a representation of the target object, reflecting the nature of the target object and/or its relationship with other things. Optionally, the first attribute information includes at least one of a target object image, a target object source, a target object title, popularity information of the target object, and resource information of the target object. For example, the first attribute information is the target object image, the target object source, the target object title, and the resource information of the target object.

Here, the target object image refers to a picture or a video of the target object. The target object source refers to a source of supply of the target object. For example, if the target object is a product, the target object source may be a flagship store, an official store, a shopping mall, etc. The target object title is a set of words for describing characteristics of the target object. For example, if the target object is clothing, the target object title may be words for describing a category, an applicable season, materials and other characteristics of the clothing. The popularity information of the target object refers to information reflecting the popularity of the target object with users, which may be a popularity index, purchases per unit time, a forwarding amount, etc. The resource information of the target object refers to the number of resources that the target object matches, such as an experience points and virtual currency.

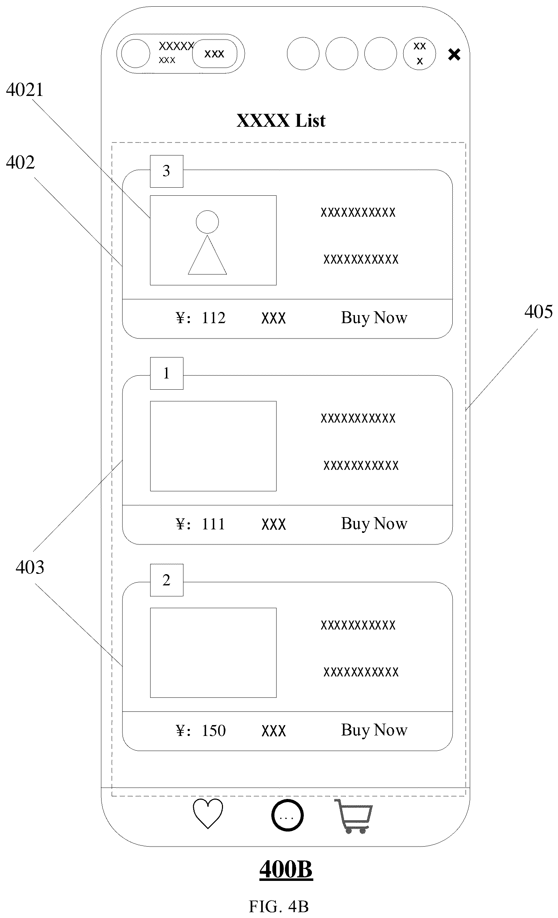

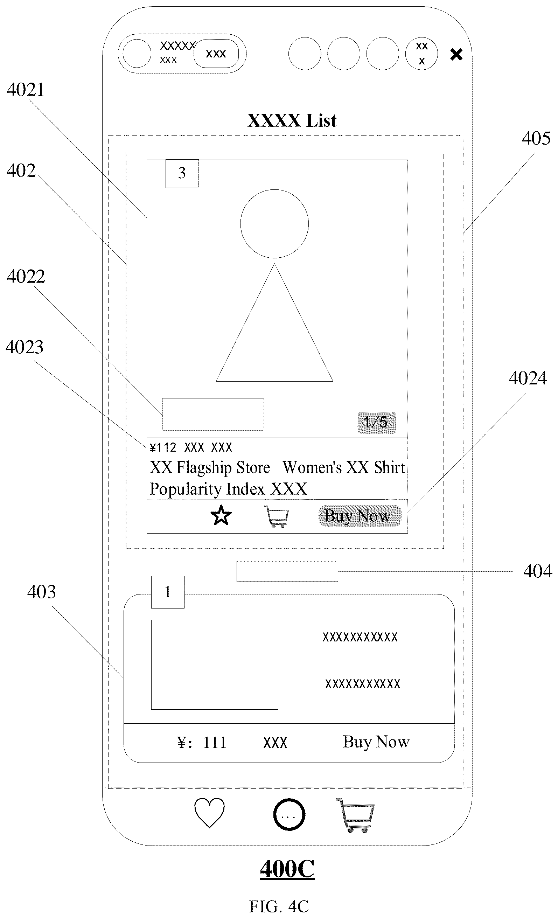

It is to be understood by those skilled in the art that, relevant information of the target object, the list, and the list objects may be displayed in the form of lists, pictures, text, pictures and text, etc., which is not limited in the present disclosure. It is to be noted that the relevant information of the target object, the list, and the list objects are displayed in the form of information cards on the object display page 400A shown in FIG. 4A, the list page 400B shown in FIG. 4B, and the list page 400C shown in FIG. 4C.

The information card in the embodiment of the present disclosure, such as the first information card 401 or a second information card, displays the information of the relevant object in the form of a card, and each information card is used to display information related to an object.

In some embodiments, the object display page 400A includes the first information card 401 corresponding to the target object.

The specific structure of the first information card 401 is exemplified as follows. The first information card 401 includes a first attribute information region for displaying the first attribute information, and a list information region 4013 for displaying the list information.

It is to be noted that the first attribute information region and the list information region 4013 may be arranged vertically, or arranged horizontally, which is not specifically limited in the present disclosure. For example, for a smartphone, the first attribute information region and the list information region 4013 may be arranged vertically with the list information region 4013 located below. For example, for a wearable device, the first attribute information region and the list information region 4013 may be arranged horizontally.

Optionally, the first attribute information region includes an image information region 4011 and an other information region 4012. The image information region 4011 is used to display an image of the target object. The other information region 4012 may be used to display information such as the target object source, the target object title, the popularity information of the target object, and the resource information of the target object. The specific information displayed in the other information region 4012 is not specifically limited in the present disclosure.

The list information is a representation of the list to distinguish between different lists. The list information includes at least one of a list icon, list name information, a list type, and a ranking of the target object on the list. Here, the list type may be a best-selling list, a trending topics list, a new arrival list, etc.

Given that it is difficult to display all the list information due to the size limit of the list information region 4013, the embodiment of the present disclosure provides a simple manner to display the list information. For example, a display style of the list information is determined based on a preset character range of the list information region 4013.

For example, the list icon is a trophy, the list name information is a stain-removing laundry detergent, the list type is the best-selling list, and the target object ranks tenth on the list. If the preset character range is no greater than 20, the list information may be displayed as oTOP 10 on Best-Selling Stain-Removing Laundry Detergent List. If the preset character range is no greater than 13, the list information may be displayed as oTOP 10 on Stain-Removing Laundry Detergent List. It is to be noted that "∘" means the trophy.

The user may perform a trigger operation for the list information corresponding to the target object, such as tapping on the list information. When the device receives the trigger operation from the user, step S304 is performed.

Here, the trigger operation may be the user tapping on the list information, or another preset operation manner, such as long-pressing the list information, or swiping simultaneously with two fingers at the position of the list information.

Step S304: a list page corresponding to the list information is displayed in response to a trigger operation for the list information corresponding to the target object, where second attribute information of the target object is displayed in a primary region of the list page.

FIG. 4B is a schematic structural diagram of a list page 400B according to an embodiment of the present disclosure. FIG. 4C is a schematic structural diagram of another list page 400C according to an embodiment of the present disclosure.

As shown in FIGS. 4A to 4C, FIG. 4A shows the list information 4013. When the user taps on the list information 4013, then the list page 400B as shown in FIG. 4B or the list page 400C as shown in FIG. 4C will be displayed. The primary region is shown on the list page 400B or the list page 400C. The second attribute information displayed in the form of a second information card 402 is displayed in the primary region.

The list page refers to a page that displays the list. Generally, the list page displays one or more of the list icon, the list name information, the list type, and the second attribute information corresponding to the list objects (the list objects refer to objects that are listed in order on the list).

The primary region of the list page refers to a region that can be viewed directly when the list page is displayed, independent of the user operation on the list page.

Next, the primary region is illustrated in conjunction with FIGS. 4B and 4C. The list page includes a list object display region 405. The list object display region 405 includes several object display sub-regions, and each object display sub-region is used to display second attribute information corresponding to a list object. The primary region is a first object display sub-region in the list object display region. For example, the target object in the object display page 400A that ranks third on the list is displayed in the first object display sub-region of the object display region 405 on the list page, followed by the list object ranking first on the list.

It is to be understood that for the several object display sub-regions, the list object displayed in each object display sub-region may be different. For example, from top to bottom of the list page 400B, the list object ranking first is displayed in the second display sub-region; and the list object ranking second is displayed in the third display sub-region.

Here, the list object display region 405 refers to a region that displays the list objects. For example, the region marked with 405 on the list page 400B shown in FIG. 4B may also be the region marked with 405 on the list page 400C shown in FIG. 4C.

In some alternative embodiments, when object display sub-regions of other orders and the first object display sub-region are displayed on the same screen, the primary region may also be an object display sub-region of another order in the list object display region, such as the second object display sub-region or the third object display sub-region. For example, the primary region may be the second object display sub-region or the third object display sub-region on the list page 400B.

Optionally, when the list page scrolls, the primary region may or may not scroll with the list page. Here, if the primary region scrolls with the list page, the list page displays the list objects more efficiently. If the primary region does not scroll with the list page, the list page may always display the target object, such that the user can perform an operation on the target object at any time.

In some embodiments, as shown in FIGS. 4B and 4C, the list page includes: a second information card 402 corresponding to the target object, where the second information card 402 includes a second attribute information region for displaying the second attribute information. Here, the second information card 402 may be displayed in the object display sub-region.

The second attribute information is a representation of the target object, reflecting the nature of the target object and/or its relationship with other things. Further, the second attribute information includes at least one of a target object image 4021, the target object source, the target object title, the popularity information of the target object, a resource value of the target object, and a recommendation reason.

Optionally, the target object source, the target object title, the popularity information of the target object, and the resource value of the target object are displayed in the region marked with 4023.

Here, for the relevant description of the target object image, the target object source, the target object title, the popularity information of the target object, and the resource value of the target object, reference may be made to the first attribute information as described above, which is not repeated herein.

It is to be noted that the target object image 4021 may include a plurality of images. For example, five target object images may be displayed, and the user can view the five target object images individually by swiping the images left and right.

The recommendation reason is obtained by filtering through historical comments on the target object from users. Here, the user refers to any user who has evaluated the target object, rather than the current user. The historical comments may be filtered based on a preset condition. Here, the preset condition may be, for example, comments with most likes, or comments from a followed streamer. It is to be noted that the historical comments may be stored at the server and may be obtained by the client from the server, which is not described in detail in the present disclosure.

Optionally, as shown in FIG. 4C, the second information card 402 includes a floating window 4022 for displaying the recommendation reason. The position of the floating window 4022 is exemplified as follows. The floating window 4022 may be located at the lower left corner of the first target object image or at the lower right corner of the first target object image.

For example, referring to FIG. 4C, the target object is a women's shirt, and then the second attribute information may include the target object image, the target object source may be an XX flagship store, the target object title may be "Spring Loose Fit Long-Sleeved Shirt for Women", and the resource value of the target object may be ¥112.

Optionally, content of the first attribute information and content of the second attribute information are completely different or at least partially identical. For example, the first attribute information includes the target object image, the target object source, and the target object title. The second attribute information includes the target object image, the target object title, the popularity information of the target object, and the resource value of the target object.

The content of the first attribute information and the content of the second attribute information are at least partially identical, such that the first attribute information of the first information card 401, which the user has viewed on the object display page 400A, may be displayed on the list page 400C, allowing the user to obtain the product information in a more continuous manner, thereby improving the user experience.

In the related art, the target object picture 1011 on the object display page 100A is generally different from a picture displayed by the target object picture 1021 on the list page 100B. Users are more sensitive to pictures than words. In view of this, in some embodiments, a first one of the target object images of the second attribute information matches a first one of the target object images of the first attribute information. In this way, the user can directly determine that they can see the target object on the list page, so as to achieve an effect of "what you see is what you get". It is to be noted that image matching here refers to identical images or images with the same part exceeding a preset area. For example, the target object image of the second attribute information is an image obtained by cropping the target object image of the first attribute information.

In some embodiments, the list page further includes a list object information card 403 for displaying the list object. Optionally, the list object information card 403 may be displayed in an object display sub-region that is not the first among the object display sub-regions.

It is to be understood by those skilled in the art that, since the target object is also an object on the list, the target object may be displayed again on the list object information card according to the ranking order. Of course, in order to avoid repeated display, the target object may also not be displayed on the list object information card, which is not specifically limited in the present disclosure.

Optionally, as shown in FIG. 4C, the size of the second information card 402 is greater than that of the list object information card 403. In this way, the second information card 402 can be more eye-catching and can display more object information, such that the user can efficiently learn more about the target object, thereby improving the user browsing experience.

Optionally, the specific information displayed by the list object information card 403 and the second information card 402 may be different.

Optionally, the display manners of the list object information card 403 and the second information card 402 may be exemplified differently as follows.

As shown in FIG. 4C, the list page further includes a scroll identifier 404 for prompting the user that the list object information card 403 may be scrolled, so as to view more list objects. Correspondingly, the second information card 402 remains fixed.

By providing the second information card and the list object information card that are different from each other, the user can quickly identify the target object on the list page while displaying as many list objects as possible on the list.

In some embodiments, as shown in FIG. 4C, the second information card further includes a functional region 4024 for displaying a function control, where the function control includes at least one of favoriting, sharing, review viewing, and a purchase action point. Here, the purchase action point may include at least one of purchasing, adding to the cart, and contacting customer service.

With such a technical solution, a user who enters the list page due to a touch by mistake can perform various functional operations on the target object directly on the list page, thereby greatly improving the user experience.

Based on the function control, the display method according to the embodiment of the present disclosure further includes at least one of the following implementations.

In some embodiments, a floating layer pops up in response to a trigger operation for the adding-to-the-cart/purchasing control. The floating layer is used to display a corresponding stock keeping unit (SKU) page, where the form of the SKU page is not limited herein, and the SKU page provided in the related art may be directly used.

In some embodiments, the target product is added to a favorite list in response to a trigger operation for the favorite control.

In some embodiments, a product share link is formed and a relevant prompt is displayed in response to a trigger operation for the share control.

In some embodiments, a corresponding review detail page is provided in response to a trigger operation for the review viewing control.

Here, the trigger operation may be a tap, a long press, etc., as long as the operation of the user meets a preset trigger condition, which is not limited in the present disclosure.

In some embodiments, the display method further includes the following steps.

The user may perform an operation on the target object image 4021 on the list page 400B or 400C. If the operation is consistent with a preset operation, then a preset page corresponding to the target object is displayed in response to the preset operation for the target object image 4021 displayed by the second information card 402, where the preset page is an object detail page of the target object and/or a live-streaming page of the target object.

Here, the preset operation may be a tap, such as a single tap or double-tap, swiping with two fingers in the same direction, etc.

Optionally, the preset page may be the object detail page of the target object. Optionally, the preset page may be the live-streaming page of the target object.

Here, the object detail page may display information related to the target object, such as the target object image, the target object source, the target object title, the popularity information of the target object, the resource value of the target object, review information of the target object, and parameter information of the target object.

Optionally, the preset page includes the object detail page and the live-streaming page. In this case, the object detail page is displayed above the live-streaming page, and a display area of the object detail page is smaller than that of the live-streaming page. For example, if the display area of the live-streaming page is used as a reference 1, the display area of the object detail page may be 0.7 or 0.5.

In this way, the user can view the object detail page and the live-streaming page of the target object simultaneously, which facilitates reducing the operation paths of the user and improving the operational efficiency.

It is to be noted that the data of the list may be stored at the server. The client sends identity codes of the target object to the server, and then the server generates and sends the list page to the client for display. Of course, the client may also directly obtain the data of the list and use the data of the list to generate the list page for display. The list page can be formed based on the related art, and the specific obtaining and formation manners of the list page are not limited in the embodiments of the present disclosure.

It is to be noted that the method in the embodiments of the present disclosure may be performed by a single device, such as a computer or a server. The method in the embodiments may also be applied to a distributed scenario to be completed through cooperation of a plurality of devices. In the distributed scenario, one of the plurality of devices may perform only one or more steps of the method in the embodiments of the present disclosure. The plurality of devices interact with each other to complete the method.

It is to be noted that some embodiments of the present disclosure are described above. Other embodiments are within the scope of the appended claims. In some cases, the actions or steps recited in the claims may be performed in an order different from that in the above-mentioned embodiments, and can still achieve desired results. In addition, the processes depicted in the accompanying drawings are not necessarily required to be shown in a particular or sequential order, to achieve desired results. In some implementations, multi-task processing and parallel processing are also possible or may be advantageous.

Based on the same inventive concept, corresponding to the method according to any one of the above-mentioned embodiments, the present disclosure further provides an information display apparatus.

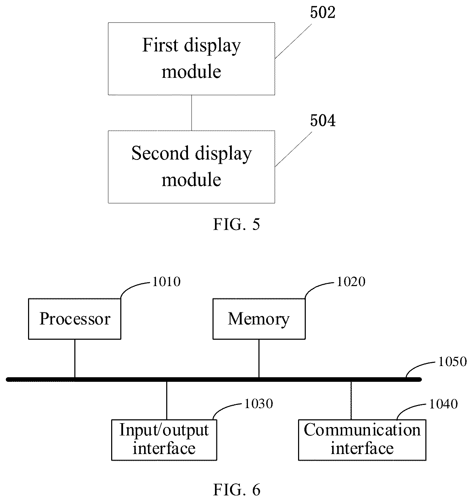

Referring to FIG. 5, the display apparatus includes:
a first display module 502 configured to: display an object display page, where the object display page includes at least first attribute information of a target object, and list information corresponding to the target object; and
a second display module 506 configured to: display a list page corresponding to the list information in response to a trigger operation for the list information corresponding to the target object, where second attribute information of the target object is displayed in a primary region of the list page.

In some embodiments, display positions of the first attribute information and the list information corresponding to the target object are adjacent to each other or at least partially overlap each other; and the first attribute information includes at least one of a target object image, a target object source, a target object title, popularity information of the target object, and resource information of the target object.

In some embodiments, the object display page includes: a first information card corresponding to the target object, where the first information card includes a first attribute information region for displaying the first attribute information, and a list information region for displaying the list information; and where the list information includes at least one of a list icon, list name information, a list type, and a ranking of the target object on the list.

In some embodiments, the list page includes a list object display region; the list object display region includes several object display sub-regions, and each object display sub-region is used to display second attribute information corresponding to a list object; and the primary region is a first object display sub-region in the list object display region.

In some embodiments, the list page includes: a second information card corresponding to the target object, where the second information card includes a second attribute information region for displaying the second attribute information; and
where the second attribute information includes at least one of a target object image, a target object source, a target object title, popularity information of the target object, a resource value of the target object, and a recommendation reason; and content of the first attribute information and content of the second attribute information are completely different or at least partially identical.

In some embodiments, the second information card further includes a functional region for displaying a function control, where the function control includes at least one of favoriting, sharing, review viewing, and a purchase action point.

In some embodiments,
the second display module 506 is further configured to: display a preset page corresponding to the target object in response to a preset operation for the target object image displayed by the second information card, where the preset page is an object detail page of the target object and/or a live-streaming page of the target object; and
where in response to the preset page comprising the object detail page and the live-streaming page, the object detail page is displayed above the live-streaming page, and a display area of the object detail page is smaller than that of the live-streaming page.

For ease of description, when described, the apparatus described above is divided into various modules based on functions. Certainly, functions of the modules may be implemented in one or more pieces of software and/or hardware when the present disclosure is implemented.

The apparatus in the above-mentioned embodiment is configured to implement the corresponding display method according to any one of the above-mentioned embodiments, and has the beneficial effects of the corresponding method embodiment, which are not repeated herein.

An embodiment of the present disclosure provides an information display method. The display method includes:
displaying an object display page, where the object display page includes at least first attribute information of a target object, and list information corresponding to the target object; and
displaying a list page corresponding to the list information in response to a trigger operation for the list information corresponding to the target object, where second attribute information of the target object is displayed in a primary region of the list page.

In some embodiments, display positions of the first attribute information and the list information corresponding to the target object are adjacent to each other or at least partially overlap each other; and the first attribute information includes at least one of a target object image, a target object source, a target object title, popularity information of the target object, and resource information of the target object.

In some embodiments, the object display page includes: a first information card corresponding to the target object, where the first information card includes a first attribute information region for displaying the first attribute information, and a list information region for displaying the list information; and where the list information includes at least one of a list icon, list name information, a list type, and a ranking of the target object on the list.

In some embodiments, the list page includes a list object display region; the list object display region includes several object display sub-regions, and each object display sub-region is used to display second attribute information corresponding to a list object; and the primary region is a first object display sub-region in the list object display region.

In some embodiments, the list page includes: a second information card corresponding to the target object, where the second information card includes a second attribute information region for displaying the second attribute information; and
where the second attribute information includes at least one of a target object image, a target object source, a target object title, popularity information of the target object, a resource value of the target object, and a recommendation reason; and content of the first attribute information and content of the second attribute information are completely different or at least partially identical.

In some embodiments, the second information card further includes a functional region for displaying a function control, where the function control includes at least one of favoriting, sharing, review viewing, and a purchase action point.

In some embodiments, the display method further includes:
displaying a preset page corresponding to the target object in response to a preset operation for the target object image displayed by the second information card, where the preset page is an object detail page of the target object and/or a live-streaming page of the target object; and
where in response to the preset page comprising the object detail page and the live-streaming page, the object detail page is displayed above the live-streaming page, and a display area of the object detail page is smaller than that of the live-streaming page.

Based on the same inventive concept, corresponding to the method according to any one of the above-mentioned embodiments, the present disclosure further provides an electronic device. The electronic device includes a memory, a processor, and a computer program stored on the memory and executable on the processor, where the processor, when executing the program, implements the display method according to any one of the above-mentioned embodiments.

FIG. 6 is a schematic structural diagram of hardware of a more specific electronic device according to an embodiment. The device may include: a processor 1010, a memory 1020, an input/output interface 1030, a communication interface 1040, and a bus 1050. The processor 1010, the memory 1020, the input/output interface 1030 and the communication interface 1040 are communicatively connected to each other inside the device by the bus 1050.

The processor 1010 may be implemented using a general-purpose central processing unit (CPU), a microprocessor, an application specific integrated circuit (ASIC), one or more integrated circuits, or the like for executing a related program, to implement the technical solutions provided in the embodiments of the specification.

The memory 1020 may be implemented in the form of a read-only memory (ROM), a random-access memory (RAM), a static storage device, a dynamic storage device, etc. The memory 1020 may store an operating system and other applications, and when the technical solutions provided in the embodiments of the specification are implemented by means of software or firmware, related program code is stored in the memory 1020 and called by the processor 1010 for execution.

The input/output interface 1030 is configured to connect to an input/output module to enable information input and output. The input/output device may be configured as a component in the device (not shown), or it may be external to the device to provide a corresponding function. The input device may include a keyboard, a mouse, a touchscreen, a microphone, various sensors, etc., and the output device may include a display, a speaker, a vibrator, an indicator light, etc.

The communication interface 1040 is configured to connect to a communication module (not shown) to enable communication interaction between the device and other devices. The communication module may communicate in a wired (e.g. a USB, a network cable, etc.), or wireless (e.g. a mobile network, Wi-Fi, Bluetooth, etc.) manner.

The bus 1050 includes a path for transmitting information between the components (for example, the processor 1010, the memory 1020, the input/output interface 1030, and the communication interface 1040) of the device.

It is to be noted that although only the processor 1010, the memory 1020, the input/output interface 1030, the communication interface 1040, and the bus 1050 are shown in the device, during a specific implementation, the device may further include other components necessary for proper operation. Furthermore, it is to be understood by those skilled in the art that the device may include only the components necessary to implement the solutions in the embodiments of the specification, and not necessarily include all of the components shown in the figure.

The electronic device in the above-mentioned embodiment is configured to implement the corresponding display method according to any one of the above-mentioned embodiments, and has the beneficial effects of the corresponding method embodiment, which are not repeated herein.

Based on the same inventive concept, corresponding to the method according to any one of the above-mentioned embodiments, the present disclosure further provides a non-transitory computer-readable storage medium storing computer instructions, where the computer instructions are used to cause a computer to perform the display method according to any one of the above-mentioned embodiments.

The computer-readable medium in this embodiment includes permanent and non-permanent, removable and non-removable media and may implement information storage by using any method or technology. Information may be computer-readable instructions, data structures, modules of a program, or other data. Examples of the computer storage medium include but are not limited to a phase-change random-access memory (PRAM), a static random-access memory (SRAM), a dynamic random-access memory (DRAM), other types of random-access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, magnetic tape or disk storage or other magnetic storage devices, or any other non-transmission media that may be configured to store information capable of being accessed by a computing device.

The computer instructions stored on the storage medium in the above-mentioned embodiment are used to cause the computer to perform the display method according to any one of the above-mentioned embodiments, and have the beneficial effects of the corresponding method embodiment, which are not repeated herein.

Based on the same inventive concept, corresponding to the display method according to any one of the above-mentioned embodiments, the present disclosure further provides a computer program product including computer program instructions. In some embodiments, the computer program instructions may be executed by one or more processors of a computer to cause the computer and/or the processors to perform the display method. Corresponding to execution bodies corresponding to the various steps in the various embodiments of the display method, the processor that performs the corresponding step may belong to the corresponding execution body.

The computer program product in the above-mentioned embodiment is used to cause the computer and/or the processors to perform the display method according to any one of the above-mentioned embodiments, and has the beneficial effects of the corresponding method embodiment, which are not repeated herein.

It is to be understood by those of ordinary skill in the art that the discussion of any one of the above-mentioned embodiments is merely exemplary, and is not intended to imply that the scope of the present disclosure (including the claims) is limited to these examples; and with the concept of the present disclosure, the technical features in the above-mentioned embodiments or different embodiments may also be combined, steps may be implemented in any order, and many other changes may be made to different aspects of the embodiments of the present disclosure as described above and are not provided in detail for simplicity.

In addition, to simplify description and discussion and avoid obscuring an understanding of the embodiments of the present disclosure, well-known power/ground connections to an integrated circuit (IC) chip and other components may or may not be shown in the accompanying drawings that are provided. Furthermore, the apparatus may be shown in the form of a block diagram to avoid obscuring an understanding of the embodiments of the present disclosure, and the following fact is also taken into account: details regarding the implementation of the apparatus in the form of block diagram are highly dependent upon a platform on which the embodiments of the present disclosure are to be implemented (i.e., such details is to be fully understood by those skilled in the art). Where the specific details (e.g., circuitry) are set forth to describe the exemplary embodiments of the present disclosure, it will be apparent to those skilled in the art that the embodiments of the present disclosure may be implemented without these specific details or with variations to these specific details. These descriptions should therefore be considered illustrative rather than limiting.

Although the present disclosure has been described with reference to the specific embodiments of the present disclosure, many substitutions, modifications, and variations of these embodiments will be apparent to those of ordinary skill in the art from the foregoing description. For example, the discussed embodiments may be used for other memory architectures (e.g., a dynamic RAM (DRAM)).

The embodiments of the present disclosure are intended to cover all such substitutions, modifications, and variations that fall within the broad scope of the appended claims. Therefore, any omissions, modifications, equivalent substitutions, improvements etc., made within the spirit and principle of the embodiments of the present disclosure are intended to be included within the scope of protection of the present disclosure.

## Claims

1. An information display method, comprising:
displaying an object display page, wherein the object display page comprises at least first attribute information of a target object, and list information corresponding to the target object; and
displaying a list page corresponding to the list information in response to a trigger operation for the list information corresponding to the target object, wherein second attribute information of the target object is displayed in a primary region of the list page.

2. The display method according to claim 1, wherein display positions of the first attribute information and the list information corresponding to the target object are adjacent to each other or at least partially overlap each other; and
the first attribute information comprises at least one of a target object image, a target object source, a target object title, popularity information of the target object, and resource information of the target object.

3. The display method according to claim 1, wherein the object display page comprises: a first information card corresponding to the target object,
wherein the first information card comprises a first attribute information region for displaying the first attribute information, and a list information region for displaying the list information; and
wherein the list information comprises at least one of a list icon, list name information, a list type, and a ranking of the target object on the list.

4. The display method according to claim 1, wherein the list page comprises a list object display region; the list object display region comprises several object display sub-regions, and each object display sub-region is used to display second attribute information corresponding to a list object; and the primary region is a first object display sub-region in the list object display region.

5. The display method according to claim 1, wherein the list page comprises: a second information card corresponding to the target object, wherein the second information card comprises a second attribute information region for displaying the second attribute information; and
wherein the second attribute information comprises at least one of a target object image, a target object source, a target object title, popularity information of the target object, a resource value of the target object, and a recommendation reason; and content of the first attribute information and content of the second attribute information are completely different or at least partially identical.

6. The display method according to claim 5, wherein the second information card further comprises a functional region for displaying a function control, wherein the function control comprises at least one of favoriting, sharing, review viewing, and a purchase action point.

7. The display method according to claim 5, further comprising:
displaying a preset page corresponding to the target object in response to a preset operation for the target object image displayed by the second information card, wherein the preset page is an object detail page of the target object and/or a live-streaming page of the target object; and
wherein in response to the preset page comprising the object detail page and the live-streaming page, the object detail page is displayed above the live-streaming page, and a display area of the object detail page is smaller than that of the live-streaming page.

8. An information display apparatus, comprising:
a first display module configured to: display an object display page, wherein the object display page comprises at least first attribute information of a target object, and list information corresponding to the target object; and
a second display module configured to: display a list page corresponding to the list information in response to a trigger operation for the list information corresponding to the target object, wherein second attribute information of the target object is displayed in a primary region of the list page.

9. An electronic device, comprising a memory, a processor, and a computer program stored on the memory and executable on the processor, wherein the processor, when executing the program, implements the display method according to any one of claims 1 to 7.

10. A non-transitory computer-readable storage medium storing computer instructions, wherein the computer instructions are used to cause a computer to perform the display method according to any one of claims 1 to 7.

11. A computer program product, comprising computer program instructions that, when executed on a computer, cause the computer to perform the display method according to any one of claims 1 to 7.
